Europäisches Patentamt

European Patent Office

Office européen des brevets

(11) Veröffentlichungsnummer: **0 263 454**

**A2**

(12) **EUROPÄISCHE PATENTANMELDUNG**

(21) Anmeldenummer: 87114465.5

(51) Int. Cl.⁴: **F28D 1/03**

(22) Anmeldetag: 03.10.87

(30) Priorität: 08.10.86 DE 8626670 U

(43) Veröffentlichungstag der Anmeldung:
13.04.88 Patentblatt 88/15

(84) Benannte Vertragsstaaten:
AT CH DE ES FR GB GR IT LI LU NL SE

(71) Anmelder: **Prof. Dr. E. Sommer GmbH**
**Lünener Kirchstrasse 1b**
**D-4750 Unna(DE)**

(72) Erfinder: **Albers, Klaus**
**Schillerstrasse 20**
**D-4550 Bramsche 1(DE)**

(74) Vertreter: **Busse & Busse Patentanwälte**
**Postfach 1226**
**D-4500 Osnabrück(DE)**

(54) **Flachheizkörper.**

(57) Ein Flachheizkörper besteht aus zumindest zwei parallel zueinander angeordneten Wandschalen (1,2) von tafelförmiger Grundgestalt, die unter Ausbildung eines Strömungswegs für das Heizmedium zwischen ihren einander zugewandten inneren Breitseiten randseitig umlaufend fest miteinander verbunden, in Bereichen zwischen ihren Rändern in gegenseitige Anlage gebracht und in den Anlagebereichen miteinander punktverschweißt sind. Zur Verbesserung der Wärmeleistung unter Einhaltung der erforderlichen Druckfestigkeit hat der Heizkörper eine Ausbildung, bei der die einander zugewandten inneren Breitseiten der beiden Wandschalen (1,2) eine flache Heizmediumkammer (12) begrenzen, deren freier Strömungsquerschnitt lediglich von über die Kammerfläche verteilten Punktschweißverbindungen zwischen den beiden Wandschalen (1,2) bereichsweise unterbrochen ist.

FIG.1

## Flachheizkörper

Die Erfindung betrifft einen Flachheizkörper, bestehend aus zumindest zwei parallel zueinander angeordneten Wandschalen von tafelförmiger Grundgestalt, die unter Ausbildung eines Strömungswegs für das Heizmedium zwischen ihren einander zugewandten inneren Breitseiten randseitig umlaufend fest miteinander verbunden, in Bereichen zwischen ihren Rändern in gegenseitige Anlage gebracht und in den Anlagebereichen miteinander punktförmig verschweißt sind.

Es sind Flachheizkörper der angegebenen Art bekannt, bei denen die beiden Wandschalen eine untereinander gleiche Ausbildung mit einer oberen und einer unteren horizontalen Sicke sowie sich zwischen diesen erstreckenden vertikalen Sicken aufweisen. Die jeweils in den beiden Wandschalen einander gegenüberliegenden Sicken bilden horizontale und senkrechte Kanäle, die auf diese Weise dem Heizmedium, insbesondere Warmwasser, einen definierten Strömungsweg durch den Heizkörper vorgeben. In den Bereichen zwischen den vertikalen Sicken sind die beiden Wandschalen in gegenseitige Anlage gebracht und hier durch Punktschweißungen miteinander verbunden, damit der Flachheizkörper über die erforderliche Festigkeit bei den im Heizbetrieb auftretenden Drücken verfügt.

Bei einem weiteren bekannten Flachheizkörper der angegebenen Art ist lediglich die innere Wandschale mit den horizontalen und vertikalen Sicken zur Ausbildung des Strömungswegs für das Heizmedium versehen, während die äußere Wandschale eben ausgebildet ist und in einer an die Grundebene der inneren Wandschale angrenzenden Ebene verläuft, ohne selbst irgendwelche Sicken oder Ausprägungen aufzuweisen. Neben der Randverbindung erfolgt wiederum in den Anlagebereichen zwischen den Rändern eine Punktverschweißung zwischen der inneren Wandschale und der äußeren Wandschale, die in Ermangelung irgendwelcher einen Versteifungseffekt auf die Wandschale ausübender Sicken oder Ausprägungen dicker als die gesickte Innenschale ausgebildet ist, damit die erforderliche Druckfestigkeit des Flachheizkörpers im Betrieb gewahrt ist.

· Beiden bekannten Ausführungsformen von Flachheizkörpern gemeinsam ist ein geringer Wärmeausnutzungsgrad des durch die Strömungskanäle geführten Heizmediums, da, bezogen auf die Gesamtfläche des Heizkörpers, für den Wärmeaustausch nur geringe, leistenförmig ausgebildete, das Heizmeidum führende Flächen zur Verfügung stehen. Aus diesem Grunde ist die Wärmeleistung der bekannten Heizkörper begrenzt.

Der Erfindung liegt die Aufgabe zugrunde, einen Flachheizkörper der angegebenen Art zu schaffen, dessen Wärmeleistung verbessert ist und bei dem zugleich mit einfachen Mitteln die an seine Druckfestigung gestellten Bedingungen erfüllt sind.

Diese Aufgabe wird nach der Erfindung bei einem Flachheizkörper der angegebenen Art dadurch gelöst, daß die einander zugewandten inneren Breitseiten der beiden Wandschalen eine flache Heizmediumkammer begrenzen, deren freier Strömungsquerschnitt lediglich von über die Kammerfläche verteilten Punktschweißverbindungen zwischen den beiden Wandschalen bereichsweise unterbrochen ist. Durch die bei der erfindungsgemäßen Ausgestaltung geschaffene flächige Heizmediumkammer wird dem Heizmedium, wie insbesondere Warmwasser, ein zwangloser Strömungsweg durch den Heizkörper dargeboten, dessen Flächenabmessungen denen der tafelförmigen Wandschalen im wesentlichen entsprechen. Somit ist die gesamte Außenfläche sowohl der inneren Wandschale als auch der äußeren Wandschale eine Heizmedium führende Fläche, die für den Wärmeaustausch, d.h. die Abgabe von Wärme an den zu beheizenden Raum, zur Verfügung steht. Auf diese Weise kann die Wärme des Heizmediums besser ausgenutzt werden, und es wird eine dementsprechend verbesserte Heizleistung erreicht. Zugleich ist durch die über die Heizkammerfläche verteilten Punktschweißverbindungen zwischen den beiden Wandschalen die erforderliche Druckfestigkeit des Heizkörpers im Heizbetrieb gewahrt.

In weiterer Ausgestaltung der Erfindung kann zumindest eine der beiden Wandschalen, vorzugsweise die innere Wandschale, mit einer aus ihrer Hauptebene versetzten umlaufenden Randleiste versehen sein, die mit dem Rand der anderen Wandschale fest verbunden ist. Diese umlaufende Randverbindung der beiden Wandschalen erfolgt üblicherweise durch eine Verschweißung.

Die andere der beiden Wandschalen, beispielsweise die äußere Wandschale, kann dabei durchgehend eben ausgebildet sein, wobei es nicht erforderlich ist, diese Wandschale zur Erzielung der erforderlichen Druckfestigkeit dicker als die mit den abgesickten Randleisten versehene Wandschale auszubilden, wenn, wie in weiterer Ausgestaltung der Erfindung vorgesehen, die Punktschweißverbindungen zwischen den beiden Wandschalen in Wandbereichen gebildet sind, die punktförmig aus der Hauptebene zumindest einer der beiden Wandschalen, in diesem Fall der äußeren Wandschale, ausgeprägt sind und eine Wandversteifung bewirken.

Es ist jedoch auch möglich, die andere der beiden Wandschalen, beispielsweise wiederum die äußere Wandschale, in an sich bekannter Weise mit einer oberen und einer unteren horizontalen Sicke sowie sich zwischen diesen erstreckenden vertikalen Sicken zu versehen, wobei sämtliche Sicken zur Außenseite der äußeren Wandschale hin gerichtet sind. Die Punktschweißverbindungen zwischen den beiden Wandschalen sind in diesem Fall zwischen nicht ausgeprägten Bereichen zwischen den vertikalen Sicken der äußeren Wandschale und punktförmig aus der Hauptebene der inneren Wandschale ausgeprägten Wandbereichen gebildet.

Es ist ferner auch eine weitere Ausgestaltung in der Weise möglich, daß die beiden Wandschalen eine wannenförmige gleiche Ausbildung mit aus ihrer Hauptebene versetzten, umlaufenden und miteinander fest verbundenen bzw. verschweißten Randleisten aufweisen. Die Punktschweißverbindungen zwischen den beiden Wandschalen sind bei dieser Ausgestaltung in punktförmig aus den Hauptebenen beider Wandschalen ausgeprägten Wandbereichen gebildet.

Zur Verbesserung der Heizleistung ist es bei Flachheizkörpern der angegebenen Art grundsätzlich bekannt, an der Außenseite der inneren Wandschale ein mäanderförmiges Konvektorblech aus Stahl oder Aluminium anzubringen. Bei den bekannten Flachheizkörpern mit vertikalen Sicken in der inneren Wandschale muß sich die Befestigung des Konvektorblechs in ihren Teilungsabständen nach dem Verlauf der vertikalen Sicken richten, wodurch die für den Wärmeübergang an das Konvektorblech optimalen Bedingungen in der Regel nicht erreichbar sind. Außerdem erstrecken sich bei den bekannten Flachheizkörpern die Konvektor bleche in ihrer Höhe nur zwischen der unteren und der oberen Sicke der Wandschale, die gegenüber den Anbringungsflächen des Konvektorbleches vorspringen, so daß letzteres nicht ohne weiteres in den Bereich der unteren Sicke herab- bzw. in den Bereich der oberen Sicke hochgezogen werden kann. Hiermit geht eine entsprechende Reduzierung der Wärmeleit-und-abgabefläche des Konvektorbleches einher.

Bei dem erfindungsgemäß ausgestalteten Flachheizkörper kann das Konvektorblech in von der Ausgestaltung der inneren Wandschale unabhängigen Teilungsabständen an deren Außenseite befestigt, z.B. angeschweißt oder angeklebt, werden, wobei sämtliche Anbringungsflächen des Konvektorblechs an der die flächige Heizmediumkammer begrenzenden inneren Wandschale, d.h. einer innenseitig unmittelbar vom Heizmedium beaufschlagten Wandfläche, anliegen. Hierdurch sind optimale Bedingungen für den Wärmeübergang vom Heizmedium an das Konvektorblech geschaffen. Darüber hinaus kann sich das Konvektorblech bei der erfindungsgemäßen Ausgestaltung in seiner Höhe im wesentlichen über den gesamten Bereich der inneren Wandschale zwischen deren unterer und deren oberer Randleiste aufgrund der wannenförmigen, untere und obere vorspringende horizontale Sicken vermeidenden Ausbildung der Wandschale erstrecken. Hierdurch werden im Interesse einer weiteren Verbesserung der Heizleistung des erfindungsgemäßen Flachheizkörpers die Wärmeleit-und -abgabeflächen des Konvektorblechs vergrößert.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung schematisch veranschaulicht ist. In der Zeichnung zeigen:

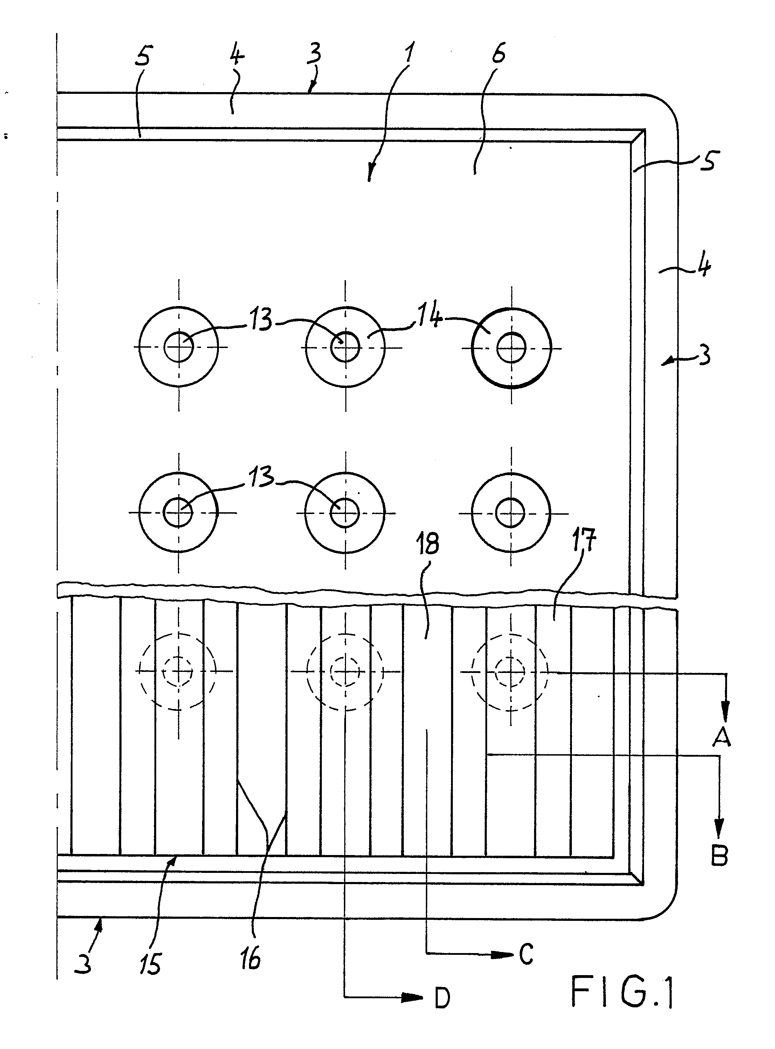

Fig. 1 eine Draufsicht auf die rechte Hälfte der inneren Wandschale eines zweischaligen Flachheizkörpers, bereichsweise in Verbindung mit einem Konvektorblech,

Fig. 2 einen Schnitt nach der Linie A der Fig. 1,

Fig. 3 einen Schnitt nach der Linie B der Fig. 1,

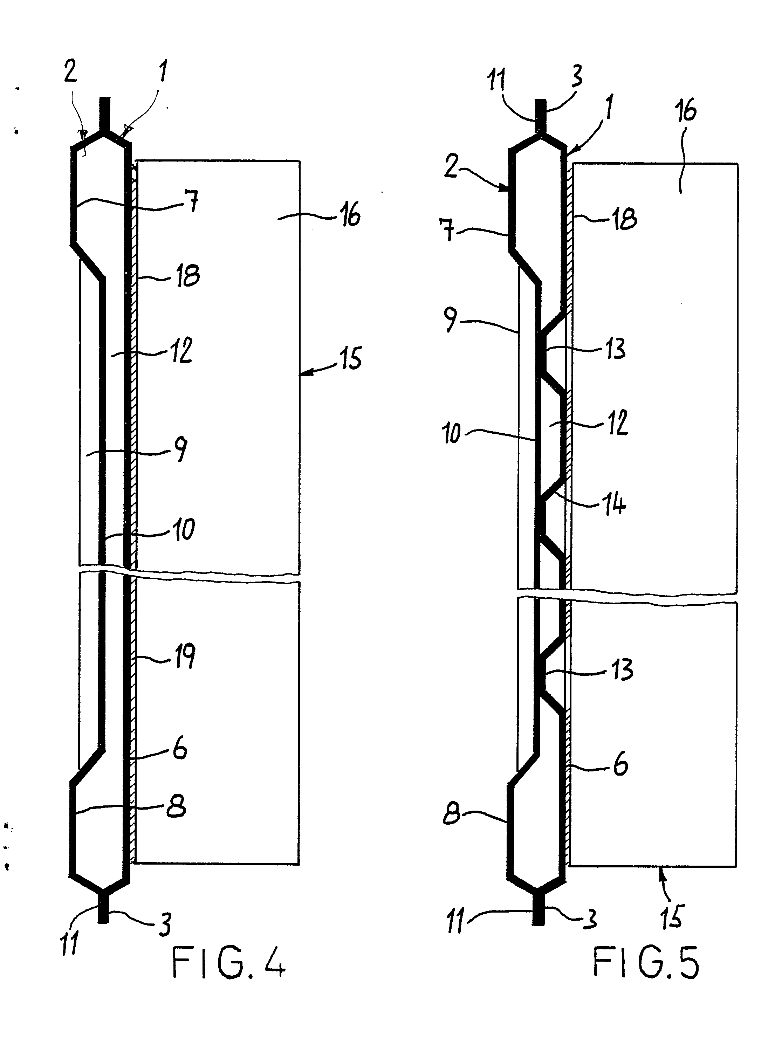

Fig. 4 einen Schnitt nach der Linie C der Fig. 1 und

Fig. 5 einen Schnitt nach der Linie D der Fig. 1.

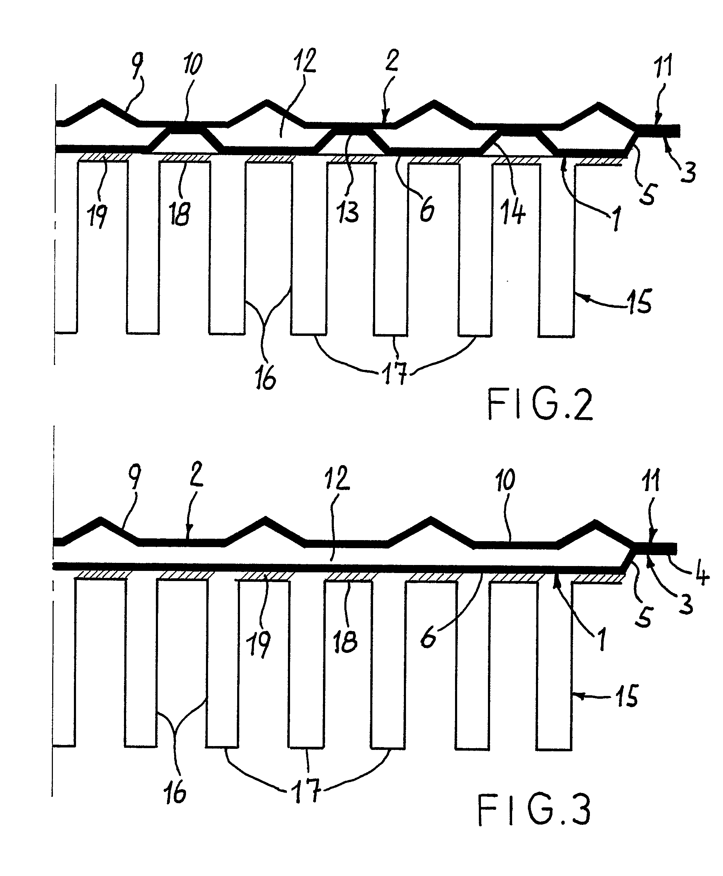

Der in der Zeichnung dargestellte Flachheizkörper besteht aus zwei parallel zueinander angeordneten flächengleichen Wandschalen 1 und 2 von tafelförmiger Grundgestalt, die von geeigneten Stahlblechen gebildet sind. Die innere Wandschale 1 besitzt eine insbesondere aus Fig. 3 ersichtliche wannenförmige Grundgestalt mit einer aus ihrer Hauptebene zur Wandschale 2 hin versetzten umlaufenden Randleiste 3. Die Randleiste 3 umfaßt einen parallel zur Hauptebene der Wandschale 1 verlaufenden Endteil 4 und einen - schrägen Übergangsteil 5 zwischen dem Endteil 4 und dem in der Hauptebene liegenden Hauptteil 6 der Wandschale 1. Die Randleiste 3 ist durch randseitiges Absicken der Wandschale 1 gebildet.

Die äußere Wandschale 2 ist mit einer oberen Sicke 7 und einer unteren Sicke 8 sowie sich zwischen diesen erstreckenden vertikalen Sicken 9 versehen. Die Sicken 7,8 und 9 sind sämtlich zur Außenseite der Wandschale 2 hin, d.h. von der Wandschale 1 fortweisend, aus der Hauptebene der Wandschale 2 ausgeprägt. Zwischen den vertikalen Sicken 9 verbleiben in der Hauptebene der Wandschale 2 liegende, nicht ausgeprägte senkrechte Wandstreifen 10. Ebenfalls in der Hauptebene der Wandschale 2 liegt die auch bei der Wandschale 2 vorhandene umlaufende Randleiste 11.

Die beiden Wandschalen 1 und 2 sind an ihren umlaufenden Randleisten 3 und 11 miteinander dicht verschweißt und begrenzen mit ihren einander zugewandten inneren Breitseiten eine flächige Heizmediumkammer 12, deren Flächenabmessung den Abmessungen der Wandschalen 1 und 2, abzüglich der miteinander verschweißten Endteile der Randleisten 3 und 11, entspricht. Das Heizmedium, insbesondere Warmwasser, gelangt in an sich bekannter Weise über einen Vorlaufanschluß in die Heizmediumkammer 12, durchströmt diese flächig und zwanglos und tritt aus einem Rücklaufanschluß aus der Heizmediumkammer 12 wieder aus.

Zwischen den beiden Wandschalen 1 und 2 sind zur Erzielung der erforderlichen Druckfestigkeit des Flachheizkörpers Punktschweißungen in in gegenseitiger Anlage gehaltenen Bereichen der beiden Wandschalen 1 und 2 gebildet. Hierzu ist die innere Wandschale 1 mit nach Art eines Punktmusters aus ihrer Hauptebene bzw. ihrem Hauptteil 6 zur Wandschale 2 hin gerichteten Ausprägungen 13 jeweils in Gegenüberlage zu einem Wandstreifen 10 der Wandschale 2 versehen. Die Ausprägungen 13 sind kreisförmig ausgebildet und gehen über einen konischen Rand 14 in den Hauptteil 6 der Wandschale 1 über. Die Kreisfläche der Ausprägung 13 entspricht in ihrer Größe der Querschnittsfläche der üblichen Punktschweißverbindungen. Es ist allerdings auch möglich, die Ausprägungen viereckig auszuführen.

An der Außenseite der inneren Wandschale 1 ist ein mäanderförmiges Konvektorblech 15 angebracht, das sich in seiner Höhe im wesentlichen über den gesamten Bereich der inneren Wandschale 1, d.h. über die Höhe des Hauptteils 6, erstreckt. Das Konvektorblech 15 besitzt Breitseiten 16, die durch äußere und innere Schmalseiten 17 und 18 miteinander verbunden sind. Die Breitseiten 16 des Konvektor blechs 15 verlaufen rechtwinklig zur Hauptebene bzw. zum Hauptteil 6 der Wandschale 1, während die parallel hierzu verlaufenden Schmalseiten 18 Anbringungsflächen für die Befestigung des Konvektorblechs 15 an der Außenseite der Wandschale 1 bilden. Die Anbringung kann durch Klebe-oder Schweißverbindungen erfolgen, wie dies bei 19 in den Schnittdarstellungen - schematisch veranschaulicht ist. Die Anbringungsflächen 18 können beliebig bemessen und angeordnet sein, wie es sich für die dauerhafte Anbringung des Konvektorbleches 15 empfiehlt, wobei die Anbringung stets an einer unmittelbar vom in der Heizmediumkammer 12 befindlichen Heizmedium beaufschlagten Wandfläche erfolgt, wie sie vom Hauptteil 6 der inneren Wandschale 1 dargeboten wird. Hierdurch sind günstige Bedingungen für den Wärmeübergang vom Heizmedium an das Konvektorblech 15 geschaffen.

## Ansprüche

1. Flachheizkörper, bestehend aus zumindest zwei parallel zueinander angeordneten Wandschalen von tafelförmiger Grundgestalt, die unter Ausbildung eines Strömungswegs für das Heizmedium zwischen ihren einander zugewandten inneren Breitseiten randseitig umlaufend fest miteinander verbunden, in Bereichen zwischen ihren Rändern in gegenseitige Anlage gebracht und in den Anlagebereichen miteinander punktverschweißt sind, dadurch gekennzeichnet, daß die einander zugewandten inneren Breitseiten der beiden Wandschalen (1,2) eine flache Heizmediumkammer (12) begrenzen, deren freier Strömungsquerschnitt lediglich von über die Kammerfläche verteilten Punktschweißverbindungen zwischen den beiden Wandschalen (1,2) bereichsweise unterbrochen ist.

2. Flachheizkörper nach Anspruch 1, dadurch gekennzeichnet, daß zumindest eine (1) der beiden Wandschalen (1,2) eine wannenförmige Ausbildung mit einer aus ihrer Hauptebene versetzten umlaufenden Randleiste (3) aufweist, die mit dem Rand (11) der anderen Wandschale (2) fest verbunden ist.

3. Flachheizkörper nach Anspruch 2, dadurch gekennzeichnet, daß die Randleiste (3) an der inneren der beiden Wandschalen (1,2) gebildet ist.

4. Flachheizkörper nach Anspruch 2 oder 3, dadurch gekennzeichnet, daß die andere der beiden Wandschalen (1,2) durchgehend eben ausgebildet ist.

5. Flachheizkörper nach Anspruch 2 oder 3, dadurch gekennzeichnet, daß die andere (2) der beiden Wandschalen (1,2) mit einer oberen und einer unteren horizontalen Sicke (7,8) sowie sich zwischen diesen erstreckenden vertikalen Sicken (9) versehen ist und sämtliche Sicken (7,8,9) zur Außenseite der Wandschale (2) hin gerichtet sind.

6. Flachheizkörper nach Anspruch 2 oder 3, dadurch gekennzeichnet, daß die beiden Wandschalen (1,2) eine gleiche Ausbildung mit aus ihrer Hauptebene versetzten, umlaufenden und miteinander fest verbundenen Randleisten (3) aufweisen.

7. Flachheizkörper nach einem der Ansprüche 1 bis 6, dadurch gekennzeichnet, daß die Punktschweißverbindungen zwischen den beiden Wandschalen (1,2) in punktförmig aus der Hauptebene zumindest einer (1) der beiden Wandschalen (1,2) ausgeprägten Wandbereichen (13) gebildet sind.

8. Flachheizkörper nach Anspruch 7, dadurch gekennzeichnet, daß die Ausprägungen (13) kreisförmig und mit einem konischen Rand (14) ausgebildet sind.

9. Flachheizkörper nach einem der Ansprüche 1 bis 8, mit einem an der Außenseite der inneren Wandschale angebrachten mäanderförmigen Konvektorblech, dadurch gekennzeichnet, daß das Konvektorblech (15) in von der Ausgestaltung der inneren Wandschale (1) unabhängigen Teilungsabständen an deren Außenseite befestigt ist.

10. Flachheizkörper nach Anspruch 9, dadurch gekennzeichnet, daß sich das Konvektorblech (15) in seiner Höhe im wesentlichen über den gesamten Bereich der inneren Wandschale (1) zwischen deren unterer und oberer Randleiste (3) erstreckt.

FIG.1

FIG.2

FIG.3

FIG.4

FIG.5